**Europäisches Patentamt**

**European Patent Office**

**Office européen des brevets**

(11) Veröffentlichungsnummer: **0 036 201**
**A2**

(12) # EUROPÄISCHE PATENTANMELDUNG

(21) Anmeldenummer: **81101906.6**

(22) Anmeldetag: **14.03.81**

(51) Int. Cl.³: **G 01 F 1/24**
**G 01 F 9/00, G 01 F 15/02**
**G 01 F 15/00**

(30) Priorität: **18.03.80 DE 3010282**
**25.10.80 DE 3040320**

(43) Veröffentlichungstag der Anmeldung:
**23.09.81 Patentblatt 81/38**

(84) Benannte Vertragsstaaten:
**AT BE CH DE FR GB IT LI LU NL SE**

(71) Anmelder: **Irion & Vosseler, Zählerfabrik**

**D-7730 Villingen-Schwenningen(DE)**

(72) Erfinder: **Rogg, Werner, Dipl.-Phys.**
**Neuköllner Weg 17**
**D-7730 Villingen-Schwenningen(DE)**

(74) Vertreter: **Patentanwälte Dipl.-Ing. Westphal Dr. rer.**
**nat. Bernd Mussgnug Dr. rer.nat. Otto Buchner**
**Seb.-Kneipp-Strasse 14**
**D-7730 VS-Villingen(DE)**

(54) **Durchflussmengenmesser für flüssige und gasförmige Medien.**

(57) Die Erfindung betrifft einen nach dem Schwebekörperprinzip arbeitenden Durchflußmengenmesser. Der Schwebekörper (8,9,10) ist über eine Stange (7) starr mit einem aus
ferromagnetischem Material bestehenden Gewichtskörper
(2) verbunden, welcher gleichzeitig den Kern einer gehäusefesten Induktionsspule (3) bildet. Die Veränderung der Induktivität ist folglich von der Durchflußmenge abhängig. Im gleichen Sinn wie der Gewichtskörper (2) wirkt eine vorgespannte
Feder (4) der Verschiebung des Schwebekörpers (8,9,10) entgegen. Bei Anwendung eines derartigen Durchflußmengenmessers zur Kraftstoffmessung in einem bewegten Fahrzeug
ergeben sich dadurch Meßfehler, daß sich dem Flüssigkeitsstrom von außen ausgelöste Stoßwellen überlagern. Nach
der Erfindung werden diese Meßfehler durch einen auf der
Verbindungsstange (7) zwischen Rückstellfeder (4) und einem
Gehäusebund (6) verschiebbar angeordneten Dämpfungskolben (5) kompensiert, dessen wirksamer Querschnitt ungefähr dem des Schwebekörpers (8,9,10) entspricht, wobei der
Medienzufluß (12) zwischen Schwebekörper (8,9,10) und
Dämpfungskolben (5) mündet.

./...

EP 0 036 201 A2

Irion & Vosseler

Zählerfabrik

Dauchinger Str. 58

D - 7730 Villingen-Schwenningen

Durchflußmengenmesser für flüssige oder
gasförmige Medien

Die Erfindung betrifft einen Durchflußmengenmesser für flüssige oder gasförmige Medien mit einem innerhalb eines Gehäuses im strömenden Medium angeordneten Strömungsmeßgeber, vorzugsweise einem unter der Wirkung der von dem Medium erzeugten Auftriebskraft verschiebbaren Schwebekörper, der über eine Stange starr mit einem Gewichtskörper verbunden ist, welcher aus ferromagnetischem Material besteht und im Feld einer gehäusefesten Induktionsspule gelegen ist. Bei diesem Durchflußmengenmesser nimmt der senkrecht in einem konischen Rohr im strömenden Medium angeordnete Schwebekörper in Abhängigkeit von der Durchflußmenge unter der Wirkung von Auftriebskräften eine bestimmte Position ein. Hierbei wirkt der Auftriebskraft die Schwerkraft und gegebenenfalls eine Federkraft oder eine von beiden Kräften gebildete Kraftsumme entgegen. Die von der Durchflußmenge ab-hängige Lage des Schwebekörpers kann hierbei mittels einer stationären, also gehäusefesten Induktionsspule in bekannter Weise ermittelt werden.

Derartige Durchflußmengenmesser sind bekannt.

Ein wesentlicher Vorteil dieser nach dem Schwebekörperprinzip arbeitenden Durchflußmengenmesser besteht darin, daß diese bei Messung von flüssigen Medien derart dimensioniert und eingeeicht werden können, daß der in den Flüssigkeiten in Form von Blasen enthaltende Gasanteil anders als bei mit Rotoren arbeitenden Meßmethoden nicht oder nur in vernachlässigbarer Weise in den Meßwert eingeht.

Aus diesem Grund und wegen des relativ einfachen mechanischen Aufbaues wurde in Erwägung gezogen, nach dem Schwebekörperprinzip arbeitende Durchflußmengenmesser zur Ermittlung des Treibstoffbedarfs in Kraftfahrzeugen einzusetzen.

Bei dieser Anwendungsart treten zusätzliche Probleme auf, da das Meßgerät infolge der Fahrzeugbewegung sehr unterschiedlichen und wechselnden Bewegungen und Lageänderungen ausgesetzt ist.

Weitgehend unabhängig von der Lage arbeiten solche Durchflußmengenmesser, bei welchen der auf den Schwebekörper wirkenden Auftriebskraft im wesentlichen eine Federkraft entgegenwirkt.

Es ist ferner ein Mengenmesser dieser Art bekannt geworden,
bei welchem sowohl ein Gewicht als auch eine Rückstellfeder
die Gegenkraft liefern. Eine derartige Anordnung reagiert
besonders empfindlich auf Änderungen bei relativ kleinen
Durchflußmengen, wie diese beim Treibstoffverbrauch von
Kraftfahrzeugmotoren zur Anzeige gebracht werden sollen.

Ein weiteres bisher noch ungelöstes Problem tritt bei dieser Anwendungsart dadurch auf, daß dem Flüssigkeitsstrom
des zu messenden Mediums z.B. infolge der Bewegung des gesamten Systems, durch die Treibstoffpumpe oder auch durch
auf Temperaturerhöhungen zurückzuführende Gasblasenbildungen Stoßwellen überlagert sind, die eine Auslenkung des
Schwebekörpers bewirken und damit die Anzeige verfälschen.

Der vorliegenden Erfindung liegt die Aufgabe zugrunde, die
oben geschilderten externen Einflüsse so zu kompensieren,
daß die hieraus resultierenden Meßfehler vermieden oder zumindest soweit wie möglich reduziert werden.

Diese Aufgabe wird dadurch gelöst, daß zwischen dem Gehäusebund und der Rückstellfeder ein längs der Verbindungsstange
verschiebbarer Dämpfungskolben angeordnet ist, daß die wirksamen Querschnitte von Dämpfungskolben und Schwebekörper annähernd gleich sind und daß der Medienzufluß in die Gehäusekammer zwischen Schwebekörper und Dämpfungskolben mündet.

Mit dieser Anordnung werden alle diejenigen Einflüsse kompensiert, welche zu Stößen oder Pulsationen des messenden Mediums führen. Der erfindungsgemäß vorgeschlagene Dämpfungskolben ist hierbei so dimensioniert und angeordnet, daß er unter der Wirkung des dem Medium erteilten Stoßes oder der Pulsation in gleichem Maße jedoch in entgegengesetzter Richtung wie der Schwebekörper ausgelenkt wird. Hierdurch wird die von der Feder erzeugte Rückstellkraft impulsartig erhöht, so daß der Schwebekörper nicht dem ihm mitgeteilten Stoß folgen kann.

Nach einem weiteren Vorschlag der Erfindung ist die vorzugsweise als Schraubenfeder ausgebildete Rückstellfeder derart dimensioniert, daß sie den Dämpfungskolben in der Ausgangslage des Schwebekörpers gerade gegen den gehäusefesten Anschlag drückt, ihn also trägt. Bei Auslenkung des Schwebekörpers infolge einer Erhöhung der Durchflußmenge wirkt der Bewegungsänderung die Trägheitsmasse des gesamten Schwebekörpersystems, bestehend aus Schwebekörper, Verbindungsstange und Gegengewicht, und die Federkraft entgegen. Erfährt dagegen das System einen Stoß, so wird die der Bewegung des Schwebekörpers entg-egenwirkende Trägheitsmasse durch die vom Dämpfungskolben gebildete Masse vergrößert. Diese Maßnahme führt aus folgendem Grund zu einer Stabilisierung des Schwebekörpers. Wird dem Durchflußmengenmesser z.B. bedingt durch die Fahrzeugbewegung in Durchflußrichtung ein Stoß erteilt, so vermindert sich der Durchtrittsquerschnitt zwischen Schwebekörper und dem Konus des Durchflußmengenmesser-Gehäuses. Infolge dieser Einschnürung tritt im Bereich des Schwebekörpers eine stärkere Verwirbelung des Mediums auf, welche zu einer Zunahme der auf den Schwebekörper wirkenden Auftriebskräfte führt. Diese zusätzlichen Auftriebskräfte würden fälschlicherweise zu einer einen größeren Durchfluß vortäuschenden Messung führen. Diese zusätzlichen Auftriebskräfte werden gleichfalls mit dem erfindungsgemäß vorgeschlagenen Dämpfungskolben kompensiert.

Wie schon eingangs erwähnt, führt die Verwendung der Rückstellfeder zur weitgehend lageunabhängigen Funktionsweise des Durchflußmengenmessers. Die Feder erzeugt auch noch in horizontaler Lage eine der Auftriebskraft entgegenwirkende Rückstellkraft. Mit dieser Feder kann ferner das im strömenden Medium gelegene Schwebekörpersystem zentriert werden, wenn nämlich, wie ferner vorgeschlagen wird, der Gewichtskörper und der Dämpfungskolben, zwischen welchen die Feder eingespannt ist, diese in ihrer Lage fixierende und zentrierende Aufnahme besitzen. In einfacher Weise wird dieser Vorschlag dadurch realisiert, daß der Dämpfungskolben und der Gewichtskörper auf ihren der Feder zugewandten Seite topfartig ausgebildet sind.

Ebenfalls der Lagezentrierung des Systems dient ein weiterer Vorschlag gemäß der Erfindung, nach welchem der Gehäusebund eine den Dämpfungskolben in Ruhelage zentrierende Aufnahme sitzt, wobei die Durchbrüche der Aufnahme und des Dämpfungskolbens, durch welche die Verbindungsstange zwischen Schwebekörper und Gewichtskörper hindurchgeführt sind, größer als der Stangendurchmesser sein müssen, so daß Berührungen zwischen der Verbindungsstange und dem Bund bzw. dem Dämpfungskolben und damit Reibungsverluste vermieden werden.

Der Schwebekörper selbst wird bei rotationssymmetrischer
Ausbildung durch das ihn umströmende Medium zentriert. Der
wirksame Teil des Schwebekörpers wurde bislang entweder
in Form eines kreisförmigen Tellers oder in Form eines
Kegelstumpfes mit in Strömungsrichtung zunehmendem Querschnitt ausgebildet.

Untersuchungen haben gezeigt, daß bei beiden Ausbildungsformen Eigenschwingungen auftreten können. Diese werden
nach einem weiteren Merkmal vorliegender Erfindung überraschenderweise vermieden, wenn der Schwebekörper in Form
eines Kegels ausgebildet ist, dessen den Prallteller bildenden Grundfläche in Strömungsrichtung vorn gelegen ist
und der sich in Strömungsrichtung verjüngt. Bei dieser Maßnahme lösen sich die an der Kante des Schwebekörpers entstehenden Randwirbel schneller vom Schwebekörper ab. Eine
weitere stabilisierende Wirkung wird erreicht, wenn der kegelförmige Schwebekörper auf der Strömung zugewandten Seite
einen zylinderscheibenförmigen Prallteller aufweist. Diese
Zylinderscheibe, deren Stärke bei einem Durchmesser von
10 bis 20 mm in der Größenordnung von einigen Zehntel liegen sollte, bewirkt einerseits eine Viskositätsunabhängigkeit im Anfangsmeßbereich und andererseits eine Anzeigestabilität im Endmeßbereich..

Eine weitere Stabilisierung kann schließlich dadurch erzielt
werden, daß der oben erläuterte kegelförmige Schwebekörper
auf seiner in Strömungsrichtung vorn gelegenen Seite einen
auf der Verbindungsstange vorgesehenen Zylinder aufweist,
dessen Länge wesentlich größer als sein Durchmesser ist.

Die oben erläuterte Dämpfungskolbenanordnung eignet sich recht gut zur Kompensation der durch die Fahrzeugbewegung bedingten Meßfehler.

Mit dieser Anordnung lassen sich jedoch nicht Störgrößen kompensieren, die auf diskontinuierliche Treibstoffregulierung beispielsweise beim sogenannten Gasgeben bzw. Gaswegnehmen zurückzuführen sind. So tritt z.B. beim Gasgeben im Strömungsweg hinter dem Schwebekörper durch den plötzlichen Abfluß des Treibstoffes ein Druckabfall auf, der zu einer Fehlanzeige führt. Um die diese Fehlanzeige verursachende Störgröße zu beseitigen oder zumindest zu reduzieren, wird nach einem weiteren Merkmal gemäß vorliegender Erfindung vorgeschlagen, im Strömungsweg hinter dem Schwebekörper ein Druckhalteventil anzuordnen. Dieses Druckhalteventil folgt den Druckänderungen, welche nicht einer Durchflußmengenänderung entsprechen und dämpft darum deren Einfluß auf den Schwebekörper.

Die Anwendung eines derartigen Druckhalteventils bei nach anderem Prinzip arbeitenden Durchflußmessern, z.B. solchen mit rotierenden Strömungsmeßgebern, ist im Sinne der Erfindung gleichfalls möglich.

Als Druckhalteventil eignet sich bei einem Durchflußmengenmesser mit Schwebekörper ein Ventilteller, der mittels einer gegen die Strömung wirkenden Schraubenfeder gegen den auf der Abströmseite des Gehäuses vorgesehenen Ventilsitz gedrückt wird.

Ein weiteres Problem ist die Feinabstimmung und Linearisierung des Meßwertgebers in der Fertigung bzw. Montage.

Zur Lösung dieser Teilaufgabe wird nach einem weiteren Merkmal der Erfindung vorgeschlagen, die Kennlinie des Meßgebers durch Veränderung des Induktionsflusses zu beeinflussen.

Zu diesem Zweck ist ein in seiner Lage veränderbarer Justierkörper vorgesehen, welcher das magnetische Feld innerhalb der Induktionsspule im Bereich des in die Spule tauchenden Gewichtskörpers beeinflußt.

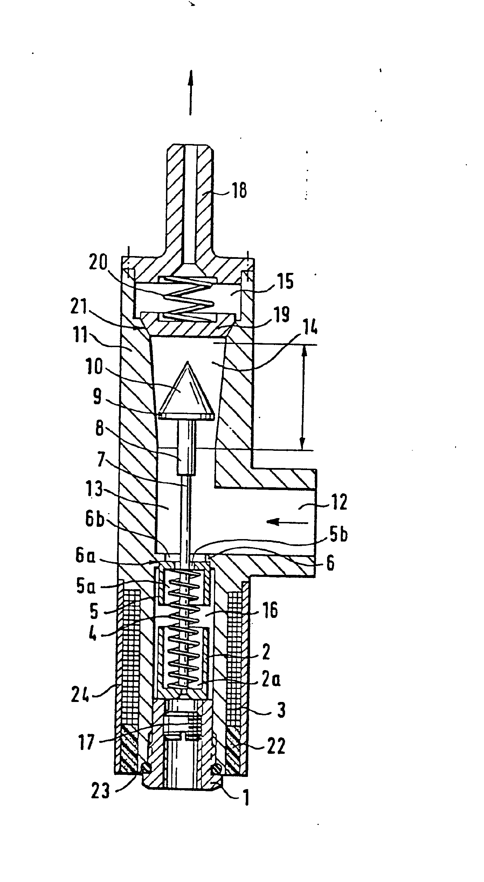

Konstruktive Einzelheiten sind nachstehend anhand des Ausführungsbeispieles, das in der Zeichnung dargestellt ist, im einzelnen erläutert. Die Zeichnung zeigt einen Axialschnitt durch einen erfindungsgemäß ausgebildeten Durchflußmengenmesser.

Der in der Zeichnung dargestellte Durchflußmengenmesser besteht aus einem Gehäuse 11, in welchem das zu messende Medium bei einem Gerät des dargestellten Aufbaus und der angegebenen Abmessungen ein flüssiger Treibstoff, vorzugsweise Benzin, über den Einlaß 12, die Kammer 13 in den der Messung dienenden Konus 14 und zum Auslaß 15 geführt wird. Gegenüber der Meßstrecke verschiebbar ist der Schwebekörper vorgesehen, welcher aus einem länglichen zylindrischen Ansatz 8, einem flachen zylinderscheibenförmigen Prallteller 9 und einem sich in Strömungsrichtung verjüngenden Kegel 10 besteht. Dieser Schwebekörper 8, 9, 10 ist über eine Stange 7 mit dem Gewichtskörper 2 verbunden, der in dem unteren zylindrischen Teil 16 des Gehäuses gelegen ist und gleichfalls vom Medium umströmt wird. Das untere Ende des Gehäuses ist von einer mittels eines O-Ringes 23 abdichtenden Schraube 1 verschlossen.

Der Gewichtskörper 2 liefert die Gegenkraft gegen die am Gewichtskörper 8, 9, 10 angreifende Auftriebskraft. Diese Gegenkraft wird noch durch die Rückstellkraft der Schraubenfeder 4 unterstützt, welche zwischen dem Gegengewicht 2 und dem Dämpfungskolben 5 eingespannt ist, welcher seinerseits an einem ringförmigen, gehäusefesten Bund 6 anliegt. Der Ringbund 6 besitzt auf seiner dem Dämpfungskolben 5 zugewandten Seite eine Aufnahme 6a, mit welcher der Dämpfungskolben 5 in Ruhelage zentriert wird. Die Schraubenfeder 4 ihrerseits wird einerseits mittels der Aufnahme 5a des Dämpfungskolbens 5 und andererseits der Aufnahme 2a des Gewichtskörpers 2 gelagert und zentriert. Diese Anordnung der Feder 4 innerhalb der Hohlräume 2a und 5a führt zu einer nicht unwesentlichen Verringerung der Gerätelängsabmessung.

Da der Schwebekörper 8, 9, 10 selbst von der Strömung zentriert wird, behält das gesamte Gebilde mit den Bauelementen 2 und 7 bis 10 auch bei Neigungen des Gehäuses 11 seine Mittellage mit nur geringfügigen Abweichungen bei. Um Arretierungen oder Blockierungen zu verhindern, sind die Durchbrüche 5b im Dämpfungskolben 5 und 6b im Bund 6 deutlich größer bemessen als der Querschnitt der Verbindungsstange 7.

Der Gewichtskörper 2 besteht aus ferromagnetischem Material und bildet innerhalb der gehäusefesten Induktionsspule 3 einen verschiebbaren Kern. Die Induktivitätsänderung infolge der Verschiebung des Gewichtskörpers 2 stellt ein Maß für die am Schwebekörper 8, 9, 10 angreifenden Auftriebskräfte und damit für die Durchflußmenge dar. Die Messung der Induktivitätsänderung erfolgt mit an sich bekannten Schaltungen, beispielsweise mittels einer wechselstromgespeisten Meßbrücke, in deren einem Zweig die Induktionsspule 3 angeordnet ist.

Im elektrischen Meßkreis auftretende Abweichungen können mit einer aus magnetischem Werkstoff bestehenden Justierschraube 17 ausgeglichen werden, welche mehr oder minder in das magnetische Innenfeld der Induktionspule 3 hineingeschraubt werden kann. Zu diesem Zweck ist in die Verschlußschraube1 die Justierschraube 17 eingesetzt.

Um den Einfluß von Störfeldern auszuschalten, ist die Induktionsspule 3, die auf einen verjüngten Ansatz des aus nichtferromagnetischem Material, z.B. Messing, VA-Stahl oder Aluminium, bestehenden Gehäuses 11 aufgewickelt oder aufgeschoben ist, von einem aus Metall bestehenden Abschirmrohr überdeckt. Zur Lagesicherung ist der außen gelegene Ringraum 22 zwischen dem Ansatz des Gehäuses 11, der Induktionsspule 3 und dem Abschirmrohr 24 mit einer elektrisch isolierenden Vergußmasse ausgefüllt.

Ein wesentliches Element nach vorliegender Erfindung ist der Dämpfungskolben 5, dessen Wirkungsweise in der Beschreibungseinleitung bereits ausführlich erläutert ist.

Bei in der Kammer 13 z.B. durch Pulsationen auftretenden Druckstößen erfährt der Schwebekörper 8, 9, 10 in Strömungsrichtung eine zusätzliche Kraft, so daß die hierdurch verursachte Verschiebung des Schwebekörpers einen höheren Durchfluß vortäuschte. Da jedoch auch auf den Dämpfungskolben, dessen Querschnitt etwa dem Querschnitt des Schwebekörpers entspricht, eine Kraft in entgegengesetzter Richtung wirkt, wird auch dieser ausgelenkt, wodurch die Rückstellkraft der nunmehr stärker vorgespannten Feder 4 erhöht wird. Diese Erhöhung der Rückstellkraft kompensiert die stoßbedingte Erhöhung der am Schwebekörper angreifenden Auftriebskraft.

Ferner kompensiert der Dämpfungskolben zusammen mit dem gemäß vorliegender Erfindung kegelförmig ausgebildeten Schwebekörperabschnitt 10 am Schwebekörper angreifende Wirbelkräfte, welche durch auf das Gehäuse 11 übertragende Stöße auftreten.

Während der Dämpfungskolben Meßfehler kompensiert, die eine Folge der Fahrzeugbewegung sind, dient das ferner vorgesehene Druckhalteventil dazu, Meßfehler zu verhindern, die Folge sprungartiger Änderungen der Durchflußmenge sind. Dieses Druckhalteventil liegt im Strömungsweg hinter der konischen Meßstrecke 14, innerhalb welcher der Schwebekörper 10 verschiebbar gelegen ist und vor der Auslaßseite 15. Es besteht bei dem dargestellten Ausführungsbeispiel aus einem Ventilteller 19, welcher unter der Wirkung der Schraubenfeder 20 gegen den konischen Ventilsitz 21 an der Auslaßseite des Gehäuses 11 gedrückt wird. Die Feder 20 stützt sich hierbei gegen die Innenseite des an das Gehäuseende angeschraubten Anschlußstutzens 18 ab.

Der konische Ventilsitz bewirkt eine symmetrische Druckverteilung zur Zentrierung des gleichfalls mit einer konischen Mantelfläche versehenen Ventiltellers 19.

Unter der Wirkung des Strömungsdruckes, welcher den Schwebekörper 10 mitnimmt, wird auch der Ventilteller 19 gegen die Kraft der Feder 20 angehoben. Wird sprungartig auf der Auslaßseite, z.B. beim Gasgeben, mehr Flüssigkeit abgesaugt, so würde bei Fehlen des Druckhalteventils der Schwebekörper 10 angesaugt und seine Stellung scheinbar eine größere Durchflußmenge anzeigen, als der tatsächlichen momentanen Durchflußmenge entspricht. Um diese Fehlanzeige zu verhindern oder zumindest den Meßfehler zu reduzieren, ist zwischen Schwebekörper 10 und Ablaufstutzen 18 das Druckhalteventil vorgesehen, dessen Teller 19 zunächst unter der Wirkung des Unterdrucks angesaugt wird und damit den unterdruckbedingten Fehler ausgleicht, ohne daß dieser eine zusätzliche Lageveränderung des Schwebekörpers 10 bewirkt.

In entsprechender Weise arbeitet das Ventil bei sprungartiger Herabsetzung der entnommenen Flüssigkeit auf der Ablaufseite, die zu einem kurzzeitigen Überdruck führt. Dieser Überdruck verschiebt den Ventilteller 19 gegen die Stromrichtung und verhindert, daß die durch den Überdruck auftretende Rückstellkraft auf den Schwebekörper 10 übertragen wird, was in gleicher Weise zu einer Meßwertverfälschung führen würde.

Konstruktiv ist das auch als Dämpfungsventil zu bezeichnende Druckhalteventil bei einem Durchflußmengenmesser der beschriebenen Art besonders einfach zu realisieren, wie die Zeichnung deutlich macht.

All diese Maßnahmen tragen dazu bei, daß ein an sich
empfindliches und darum bisher nur für stationäre Zwecke
benutztes Meßsystem zur Messung des Kraftstoffverbrauches eines bewegten Kraftfahrzeuges brauchbar wird.

# FIGURENLEGENDE

| | |
|---|---|
| 1 | Verschlußschraube |
| 2 | Gewichtskörper |
| 2a | Hohlraum zur Federaufnahme |
| 3 | Induktionsspule |
| 4 | Rückstellfeder |
| 5 | Dämpfungskolben |
| 5a | Hohlraum zur Aufnahme im Dämpfungskolben |
| 5b | Als Bohrung ausgebildeter Durchbruch |
| 6 | Ringförmiger Anschlagbund im Gehäuse |
| 6a | Aufnahme für Dämpfungskolben 5 |
| 6b | Als Bohrung ausgebildeter Durchbruch |
| 7 | Verbindungsstange |
| 8 | Zylindrischer Ansatz des Schwebekörpers |
| 9 | Zylinderscheibenförmiger Prallteller des Schwebekörpers |
| 10 | Kegel des Schwebekörpers |
| 11 | Gehäuse |
| 12 | Flüssigkeitseinlaß |
| 13 | Kammer |
| 14 | Konus |
| 15 | Zylindrischer Auslaß |
| 16 | Flüssigkeitsgefüllte untere Kammer des Gehäuses 11 |
| 17 | Justierschraube |
| 18 | Anschlußstutzen |
| 19 | Ventilteller |
| 20 | Schraubenfeder |
| 21 | Konischer Ventilsitz |
| 22 | Ringraum |
| 23 | O-Ring |
| 24 | Abschirmrohr |

Dipl. Ing. Klaus Westphal

Dr. rer. nat Bernd Mussgnug

Dr. rer. nat Otto Buchner

P A T E N T A N W Ä L T E

0036201

- 1 -

P a t e n t a n s p r ü c h e

1. Durchflußmengenmesser für flüssige oder gasförmige
Medien mit einem innerhalb eines Gehäuses im strömenden Medium angeordneten, unter der Wirkung der von dem
Medium erzeugten Auftriebskraft verschiebbaren Schwebekörper, der über eine Stange starr mit einem Gewichtskörper verbunden ist, der vorzugsweise aus ferromagnetischem Material besteht und im Feld einer gehäusefesten Induktionsspule gelegen ist, wobei zwischen Gewichtskörper und einem gehäusefesten Bund eine der
Auftriebskraft entgegenwirkende Rückstellfeder angeordnet
ist, dadurch gekennzeichnet, daß zwischen dem Gehäusebund (6) und der Rückstellfeder (4) ein längs der Verbindungsstange (7) verschiebbarer Dämpfungskolben (5)
angeordnet ist, daß die wirksamen Querschnitte von
Dämpfungskolben (5) und Schwebekörper (8,9,10) annähernd
gleich sind und daß der Medienzufluß (12) in die Gehäusekammer (13) zwischen Schwebekörper (8,9,10) und Dämpfungskolben (5) mündet.

2. Durchflußmengenmesser nach Anspruch 1, dadurch gekennzeichnet, daß die vorzugsweise als Schraubenfeder ausgebildete Rückstellfeder (4) derart dimensioniert ist, daß die von ihr in der Ausgangslage des Schwebekörpers (8,9,10) erzeugte Kraft dem Gewicht des Dämpfungskolbens (5) entspricht.

3. Durchflußmengenmesser nach Anspruch 1 oder 2, dadurch gekennzeichnet, daß der Gewichtskörper (2) und der Dämpfungskolben (5) die Rückstellfeder (4) zentrierende Aufnahmen (5a, 2a) aufweisen.

4. Durchflußmengenmesser nach Anspruch 3, dadurch gekennzeichnet, daß der Gewichtskörper (2) und/oder der Dämpfungskolben (5) topfförmig ausgebildet sind.

5. Durchflußmengenmesser nach einem der Ansprüche 1 bis 4, dadurch gekennzeichnet, daß der Gehäusebund (6) eine den Dämpfungskolben (5) in Ruhelage zentrierende Aufnahme (6a) besitzt und die Durchmesser der von der Verbindungsstange (7) durchsetzten Durchbrüche (5b,6b) wesentlich größer als der Durchmesser der Verbindungsstange (7) sind.

6. Durchflußmengenmesser insbesondere nach einem der Ansprüche 1 bis 5, dadurch gekennzeichnet, daß der Schwebekörper in Form eines Kegels (10) ausgebildet ist, dessen einen Prallteller bildende Grundfläche in Strömungsrichtung vorn gelegen ist und der sich in Strömungsrichtung verjüngt.


7.  Durchflußmengenmesser nach Anspruch 6, dadurch gekennzeichnet, daß der Schwebekörper aus einem zylinderscheibenförmigen Prallteller (9) und einem sich diesem anschließenden Kegel (10) besteht. .


8.  Durchflußmengenmesser nach Anspruch 6 oder 7, dadurch gekennzeichnet, daß der Schwebekörper (10) in Strömungsrichtung vorn einen auf der Verbindungsstange (7) vorgesehenen Zylinder (8) aufweist, dessen Länge wesentlich größer als sein Durchmesser ist.


9.  Durchflußmengenmesser für flüssige oder gasförmige Medien mit einem innerhalb eines Gehäuses im strömenden Medium angeordneten Strömungsmeßgeber, vorzugsweise einem unter der Wirkung der von dem Medium erzeugten Auftriebskraft verschiebbaren Schwebekörper, der über eine Stange starr mit einem Gewichtskörper verbunden ist, der vorzugsweise aus ferromagnetischem Material besteht und im Feld einer gehäusefesten Induktionsspule gelegen ist, insbesondere nach einem der vorhergehenden Ansprüche, dadurch gekennzeichnet, daß im Strömungsweg hinter dem Schwebekörper (10) ein Druckhalteventil (19, 20, 21) angeordnet ist.


10.  Durchflußmengenmesser nach Anspruch 9, dadurch gekennzeichnet, daß das Druckhalteventil aus einem Ventilteller (19) besteht, der mittels einer gegen die Strömung wirkenden Schraubenfeder (20) gegen den auf der Abströmseite des Gehäuses (11) vorgesehenen Ventilsitz (21) gedrückt wird.

11. Durchflußmengenmesser insbesondere nach einem der vorhergehenden Ansprüche, dadurch gekennzeichnet, daß unterhalb des Gewichtskörpers (2) und koaxial zu diesem im Feld der Induktionsspule (3) ein aus magnetischem, vorzugsweise ferromagnetischem Material bestehender Justierkörper (17) axial verstellbar und festlegbar, vorzugsweise verschraubbar angeordnet ist.

12. Durchflußmengenmesser insbesondere nach einem der vorhergehenden Ansprüche, dadurch gekennzeichnet, daß die Induktionsspule (3) auf einen verjüngten Ansatz des aus Kunststoff bestehenden Gehäuses (11) aufgewickelt oder aufgeschoben ist, und daß die Spule mit einem metallischen Rohr (24) nach außen abgeschirmt ist.

13. Durchflußmengenmesser nach Anspruch 12, dadurch gekennzeichnet, daß der von Gehäuseansatz, Induktionsspule (3) und Abschirmrohr (24) gebildeter, stirnseitig offener Ringraum (22) mit Vergußmasse ausgefüllt ist.